(19) Europäisches Patentamt
European Patent Office
Office européen des brevets

(11) **EP 3 536 965 B1**

(12) **EUROPÄISCHE PATENTSCHRIFT**

(45) Veröffentlichungstag und Bekanntmachung des Hinweises auf die Patenterteilung:
**22.09.2021   Patentblatt 2021/38**

(51) Int Cl.:
**F04D 19/04** *(2006.01)*        **F04D 29/059** *(2006.01)*
**F04D 29/66** *(2006.01)*        **F04D 27/02** *(2006.01)*

(21) Anmeldenummer: **18159918.4**

(22) Anmeldetag: **05.03.2018**

(54) **VAKUUMPUMPE, WOBEI DER TRÄGER EINES WÄLZLAGERS EINE VERÄNDERBARE STEIFIGKEIT UND/ODER DÄMPFUNGSWIRKUNG HAT**

VACUUM PUMP WHEREIN THE SUPPORT OF A ROLLING BEARING HAS AN ADJUSTABLE STIFFNESS AND/OR DAMPING PROPERTY

POMPE À VIDE DANS LAQUELLE LE SUPPORT D'UN PALIER À ROULEMENT A UNE RIGIDITÉ ET/OU UN AMORTISSEMENT RÉGLABLE(S)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**11.09.2019   Patentblatt 2019/37**

(73) Patentinhaber: **PFEIFFER VACUUM GMBH**
**35614 Asslar (DE)**

(72) Erfinder:
• **Wirth, Adrian**
**35582 Wetzlar (DE)**

• **Sieben, Daniel**
**35435 Wettenberg (DE)**

(74) Vertreter: **Manitz Finsterwald**
**Patent- und Rechtsanwaltspartnerschaft mbB**
**Martin-Greif-Strasse 1**
**80336 München (DE)**

(56) Entgegenhaltungen:
**EP-A1- 3 043 074        EP-A1- 3 444 478**
**EP-A2- 2 884 125        WO-A1-2019/008370**
**CN-A- 105 508 498        DE-A1- 2 519 651**
**DE-A1-102007 052 479        DE-A1-102011 005 494**
**JP-A- H03 213 695**

EP 3 536 965 B1

**Beschreibung**

Die vorliegende Erfindung betrifft eine Vakuumpumpe, insbesondere Turbomolekularpumpe, mit einem Gehäuse, und einem in dem Gehäuse drehbar gelagerten Rotor, der zu einer Drehung antreibbar ist, die eine Förderung eines Prozessgases von einem Einlass zu einem Auslass der Vakuumpumpe bewirkt, wobei der Rotor in dem Gehäuse zumindest einseitig durch ein Wälzlager drehbar gelagert ist. Konkret betrifft die Erfindung eine Vakuumpumpe nach dem Oberbegriff des Anspruchs 1. Vakuumpumpen nach diesem Oberbegriff sind beispielsweise in der DE 10 2007 052 479 A1, DE 25 19 651 A1 und der EP 3 043 074 A1 offenbart.

Außerdem betrifft die Erfindung ein Verfahren zum Betreiben einer Vakuumpumpe, wobei die Vakuumpumpe ein Gehäuse, und einen in dem Gehäuse drehbar gelagerten Rotor umfasst, der zu einer Drehung angetrieben wird, die eine Förderung eines Prozessgases von einem Einlass zu einem Auslass der Vakuumpumpe bewirkt, und wobei der Rotor in dem Gehäuse zumindest einseitig durch ein Wälzlager drehbar gelagert wird.

Im Allgemeinen unterliegen rotierende Maschinen, wie z.B. Vakuumpumpen der genannten Art, Konstruktionskriterien, entsprechend derer sich im Bereich der Nenndrehzahl bzw. im erlaubten Drehzahlbetriebsbereich keine Systemresonanzen befinden und/oder eine erforderliche Mindestdämpfung gewährleistet sein muss. Jedoch schränken vorhandene Systemresonanzen den für den Betrieb zulässigen Drehzahlbereich ein. Häufig ist eine Erweiterung des zulässigen Drehzahlbereichs wünschenswert, mit entsprechender Reduktion von Vibrationen in den zu erschließenden Drehzahlbereichen und hiermit einhergehenden verringerten akustischen Emissionen und vergrößerter Lebensdauer.

Ferner sind geringere Vibrationen bei Nenndrehzahl einer Vakuumpumpe, die in diesem Zusammenhang auch als Enddrehzahl bezeichnet wird, ein immer wichtiger werdendes Merkmal der Spezifikation der Vakuumpumpe. Beispielsweise ist Vibrationsarmut besonders relevant für Turbomolekularpumpen zur Evakuierung von Elektronenmikroskopen.

Bei Vakuumpumpen, insbesondere Turbomolekularpumpen, der eingangs genannten Art werden üblicherweise bei einer Beschleunigung des Rotors auf eine Nenn- oder Betriebsdrehzahl, was auch als Hochlauf bezeichnet wird, eine oder mehrere Resonanzbereiche des Rotors passiert, insbesondere rotordynamische Starrkörpermoden und/oder in einigen Fällen auch Biegeschwingungsmoden. Im Betrieb bei Nenndrehzahl mag zwar bei entsprechender Auslegung keine Resonanz auftreten, sodass hier ein relativ ruhiger Lauf des Rotors möglich ist. Jedoch ist auch ein leiser und vibrationsarmer Hochlauf auf Nenndrehzahl in ähnlicher Weise erstrebenswert, wie ein ruhiger, insbesondere akustisch nicht wahrnehmbarer, Betrieb auf Nenndrehzahl.

Es ist eine Aufgabe der Erfindung, Schwingungen, insbesondere Vibrationen, eines Rotors einer Vakuumpumpe der eingangs genannten Art zu reduzieren.

Diese Aufgabe wird durch eine Vakuumpumpe gemäß Anspruch 1 gelöst, und insbesondere dadurch, dass eine Steifigkeit und/oder eine Dämpfungswirkung des Wälzlagers mittels eines Aktors veränderbar ist, der ein elektro- und/oder magnetoaktives Polymer umfasst.

Bei den bekannten Vakuumpumpen der eingangs genannten Art muss im Allgemeinen ein Kompromiss zwischen erlaubtem Drehzahlbereich, Resonanzlagen, vibrations- und schallgedämpftem Betrieb, Mindestlagersteifigkeiten im horizontalen Betrieb des Rotors und/oder gegebenenfalls weiterer Parameter, beispielsweise auch Parameter mehrerer Rotoren, gefunden werden. Erfindungsgemäß kann nun, insbesondere für verschiedene Drehzahlbereiche, eine unterschiedliche Steifigkeit und/oder eine unterschiedliche Dämpfungswirkung, insbesondere im Betrieb, bereitgestellt werden. Hierdurch kann das Schwingungsverhalten des Rotors samt Resonanzfrequenzen, insbesondere im Betrieb, je nach Bedarf verändert werden. Somit können Schwingungen insgesamt deutlich reduziert werden. Dies bewirkt eine geringere Schallemission und eine höhere Lebensdauer der Vakuumpumpe.

Der beschriebene Kompromiss führte im Stand der Technik regelmäßig dazu, dass dem Betrieb bei Nenndrehzahl hinsichtlich Laufruhe der Vorrang eingeräumt wurde, wohingegen beim Hochlauf höhere Vibrationen in Kauf genommen wurden. Erfindungsgemäß kann nun beispielsweise auch beim Hochlauf eine gute Laufruhe mit entsprechend geringen Schallemissionen und verbesserter Lebensdauer erreicht werden, beispielsweise indem die Steifigkeit und/oder die Dämpfungswirkung des Wälzlagers verändert wird, wenn sich die Drehzahl des Rotors beim Hochlauf einer Resonanzfrequenz nähert. So kann die Resonanzfrequenz beispielsweise umgangen oder vermieden werden. Zwar kann sich insbesondere durch Veränderung der Steifigkeit die Resonanzfrequenz lediglich verschieben, jedoch kann insbesondere auch vor Erreichen von deren Drehzahlbereich eine weitere Veränderung von Steifigkeit und/oder Dämpfungswirkung vorgenommen werden, sodass auch die zunächst resultierende Resonanzfrequenz umgangen werden kann. So können letztlich praktisch alle Resonanzbereiche und/oder Schwingungsmaxima jeweils für eine gegebene Systemsteifigkeit bzw. -dämpfung umgangen werden. Insgesamt lässt sich also eine, insbesondere auch im Hochlauf, besonders laufruhige Vakuumpumpe bereitstellen.

Beispielsweise kann bei der erfindungsgemäßen Vakuumpumpe auch die Steifigkeit und/oder Dämpfungswirkung derart veränderbar sein oder verändert werden, dass ein besonders großer Abstand der Nenndrehzahl zu einer Resonanzdrehzahl des System eingestellt wird. Hierdurch können Schwingungen weiter reduziert und die Lebensdauer erhöht werden.

Die Erfindung erlaubt eine besonders gute Schwingungsreduzierung bei Vakuumpumpen mit hohen Rotordrehzahlen, insbesondere von mindestens 50 Hz. Die Vakuumpumpe kann beispielsweise als Turbomolekularpumpe, Wälzkolbenpumpe oder Schraubenpumpe ausgebildet sein.

Eine Ausführungsform sieht vor, dass die Steifigkeit und/oder die Dämpfungswirkung in radialer und/oder in axialer Richtung veränderbar ist. Somit lässt sich das Schwingungsverhalten des Rotors besonders gezielt beeinflussen, wenn eine unerwünscht große Schwingung in radialer und/oder axialer Richtung auftritt.

Erfindungsgemäß ist ein Aktor vorgesehen, mittels dessen die Steifigkeit und/oder die Dämpfungswirkung veränderbar ist. Hierdurch wird die Veränderung auf besonders einfache und vorteilhaft steuerbare Weise bewirkt.

Erfindungsgemäß ist außerdem vorgesehen, dass der Aktor ein elektro- und/oder magnetoaktives Polymer umfasst. Ein solches erlaubt eine schnelle Veränderung der Steifigkeit und/oder der Dämpfungswirkung, geringe Herstellungskosten, und relativ viele Veränderungszyklen, also eine gute Lebensdauer. Das elektroaktive Polymer erfordert außerdem im Wesentlichen keine Leistungsaufnahme innerhalb eines Zustands, sondern nur während des Veränderns oder Schaltens. Auch erweist es sich hier als vorteilhaft, dass die nötigen (Hoch-) Spannungsquellen bereits mit kleinem Bauraum und kostengünstig erhältlich sind. Das Polymer kann beispielsweise als, insbesondere dielektrisches, Elastomer ausgebildet sein, was eine gute Ansteuerbarkeit bei vorteilhafter Dämpfungswirkung gewährleistet.

Bei einer weiteren Ausführungsform ist eine Steuerungsvorrichtung, insbesondere für den Aktor, vorgesehen, die dazu ausgebildet ist, die Steifigkeit und/oder die Dämpfungswirkung des Wälzlagers in Abhängigkeit von einer Drehzahl und/oder einem Schwingungsverhalten des Rotors zu verändern. So können Rotorschwingungen gezielt minimiert werden. Eine drehzahlabhängige Steuerung eignet sich besonders für Systeme mit bekanntem Schwingungsverhalten in Abhängigkeit von Drehzahl, Steifigkeit und Dämpfungswirkung. Dabei ist der Steuerungsaufwand im Betrieb relativ gering, insbesondere da die Drehzahl meist ohnehin ermittelt wird. Noch präziser können Schwingungen vermieden werden, indem die tatsächlichen Schwingungen des Rotors gemessen werden und die Steuerung die Steifigkeit und/oder die Dämpfungswirkung des Wälzlagers in Abhängigkeit des Schwingungsverhalten des Rotors verändert. Dadurch können Abweichungen des tatsächlichen Schwingungsverhaltens von einem rechnerisch oder experimentell im Vorfeld des Betriebs ermittelten Schwingungsverhalten zuverlässig ausgeglichen werden. Für die Drehzahl kann allgemein auch eine Drehfrequenz des Rotors herangezogen werden.

Es kann zum Beispiel eine Steuerungsvorrichtung, insbesondere für den Aktor, vorgesehen sein, die dazu ausgebildet ist, die Steifigkeit und/oder die Dämpfungswirkung zwischen zumindest zwei Stufen umzuschalten. Es erfolgt bei diesem Beispiel also im Wesentlichen keine kontinuierliche Änderung, sondern ein quasi diskretes Umschalten. Insbesondere kann die Steuerungsvorrichtung nur zwischen genau zwei Stufen von Steifigkeit und/oder Dämpfungswirkung umschalten. Für den Fall, dass ein elektrisch oder elektromagnetisch betätigter Aktor vorgesehen ist, kann dabei beispielsweise ein "an"- und ein "aus"-Zustand vorgesehen sein, wobei die Steuerungsvorrichtung entsprechend eine Spannung und/oder einen Strom im Aktor an bzw. aus schaltet.

Die zumindest zwei Stufen können beispielsweise Steifigkeiten des Wälzlagers im Verhältnis von wenigstens 1,5:1, insbesondere wenigstens 2:1, insbesondere wenigstens 3:1, und/oder höchstens 10:1, insbesondere höchstens 5:1, insbesondere höchstens 4:1, aufweisen. Alternativ oder zusätzlich können die zumindest zwei Stufen beispielsweise Dämpfungen des Wälzlagers im Verhältnis von wenigstens 2:1, insbesondere wenigstens 5:1, insbesondere wenigstens 9:1, und/oder höchstens 30:1, insbesondere höchstens 20:1, insbesondere höchstens 11:1, aufweisen.

Beispielsweise kann eine Steuerungsvorrichtung vorgesehen und derart ausgebildet sein, dass Schwingungsverläufe des Rotors an einem bestimmten Ort in der Vakuumpumpe in Abhängigkeit von der Drehzahl für zumindest zwei Aktorzustände ermittelbar und/oder hinterlegbar sind, und dass an zumindest einem Schnittpunkt der Schwingungsverläufe zwischen diesen Aktorzuständen umgeschaltet wird. Insbesondere kann immer der niedrigere Schwingungsverlauf gewählt werden. Somit lässt sich auf einfache Weise ein möglichst schwingungsarmer, tatsächlicher Schwingungsverlauf realisieren.

Gemäß einem weiteren Ausführungsbeispiel ist eine Steuerungsvorrichtung vorgesehen, die dazu ausgebildet ist, die Steifigkeit und/oder die Dämpfungswirkung innerhalb einer Zeitspanne zu verändern und/oder innerhalb einer Zeitspanne zwischen zwei Einstellungen oder Stufen, insbesondere zwischen einer harten Einstellung und einer weichen Einstellung, umzuschalten. Vorzugsweise ist vorgesehen, dass die Zeitspanne weniger als 1 Sekunde, bevorzugt weniger als 500 ms, insbesondere bevorzugt weniger als 100 ms beträgt. Dabei oder unabhängig davon kann für die Beziehung zwischen der Zeitspanne $\tau$ und der Drehfrequenz $\Omega$ des Rotors gelten: $\tau < 5 \cdot 2\pi/\Omega$.

Die Erfindung ermöglicht folglich vergleichsweise kurze Zeitspannen zum Verändern oder Umschalten. Eine kurze Umschaltzeit und folglich ein schnelles Umschalten ist besonders vorteilhaft.

Grundsätzlich ist es besonders vorteilhaft, wenn die Steifigkeit und die Dämpfungswirkung gemeinsam veränderbar sind. Dies vereinfacht z.B. die Steuerung der Vakuumpumpe.

Gemäß einer weiteren Ausführungsform ist neben dem Aktor, mittels dessen die Steifigkeit und/oder die Dämpfungswirkung veränderbar ist, eine Steuerungsvorrichtung vorgesehen, die dazu ausgebildet ist, den Aktor auch als Sensor für ein Schwingungsverhalten des Rotors zu verwenden. Diese Maßnahme stellt eine vorteilhafte Funktionsintegration dar, wodurch sich Herstellungs- und Betriebskosten verringern lassen, beispielsweise da kein zusätzlicher Sensor vorgesehen werden muss. Gleichzeitig kann so eine besonders präzise Steuerung des Aktors ermöglicht werden und somit die Schwingungen im Ergebnis noch weiter reduziert werden. Insbesondere kann die Steuerungsvorrichtung dazu ausgebildet sein, das Schwingungsverhalten des Rotors mittels des als Sensor verwendeten Aktors zu ermitteln und die Steifigkeit des Wälzlagers in Abhängigkeit des ermittelten Schwingungsverhaltens des Rotors zu verändern.

Gemäß einer Weiterbildung ist vorgesehen, dass das Wälzlager zumindest einen Lagerring und eine Mehrzahl an Wälzkörpern umfasst, die an dem Lagerring abrollen, wobei ein Basiselement und eine Aufhängung für den Lagerring zwischen dem Lagerring und dem Basiselement vorgesehen sind, die den Aktor umfasst und dem Wälzlager die veränderbare Steifigkeit und/oder Dämpfungswirkung zumindest teilweise verleiht. Dies stellt eine konstruktiv und herstellungstechnisch besonders einfache und zuverlässige Möglichkeit dar, Rotorschwingungen zu reduzieren.

Der Aktor kann beispielsweise dazu ausgebildet sein, den äußeren Lagerring zur Realisierung unterschiedlicher Steifigkeiten und/oder Dämpfungswirkungen unterschiedlich stark in radialer und/oder axialer Richtung zu beaufschlagen. Dabei kann grundsätzlich ein Beaufschlagungsniveau auch einer Kraft von Null entsprechen. Dieses Niveau kann beispielsweise einem Zustand entsprechen, in dem der Aktor den Lagerring und/oder das Basiselement nicht berührt.

Grundsätzlich kann der Aktor bei elektrischer und/oder magnetischer Betätigung in Feldrichtung oder quer zur Feldrichtung wirken und/oder den Lagerring und/oder das Basiselement beaufschlagen. So kann beispielsweise eine besonders große Ausdehnung und/oder eine besonders große Kraft in der entsprechenden Richtung in Bezug auf das Feld vorteilhaft ausgenutzt werden.

Erfindungsgemäß weist der Aktor in einer Betätigungsrichtung eine Länge von mindestens 1 mm auf. Allgemein kann der Aktor beispielsweise in einer Betätigungsrichtung eine Länge von mindestens 2 mm, und/oder höchstens 10 mm, insbesondere höchstens 5 mm, insbesondere höchstens 3 mm, insbesondere etwa 2,5 mm aufweisen.

Beispielsweise kann der Aktor derart ausgebildet sein, dass er in einem ersten Schaltzustand zumindest eines von Lagerring und Basiselement nicht berührt und in einem zweiten Schaltzustand den Lagerring abgestützt am Basiselement beaufschlagt. Hierdurch können auf besonders einfache Weise zwei Schaltzustände mit wirksamem Unterschied in Steifigkeit und/oder Dämpfungswirkung realisiert werden.

Alternativ kann der Aktor beispielsweise derart ausgebildet sein, dass er dauerhaft mit dem Lagerring und dem Basiselement verbunden ist. Hierdurch kann in jedem, also auch dem nicht beschalteten Zustand des Aktors durch dessen passive Steifigkeit und/oder Dämpfungswirkung diese für den Lagerring bereitgestellt werden.

Hierdurch kann beispielsweise in der entsprechenden Richtung, also insbesondere radial oder axial, auf zusätzliche, passive Aufhängungselemente verzichtet werden.

Grundsätzlich ist es auch denkbar, mehrere Aktoren vorzusehen. Diese können beispielsweise zu einem Teil mit einem berührungslosen Schaltzustand und zu einem anderen Teil permanent verbunden ausgeführt sein. Auch können beispielsweise sowohl für die radiale als auch die axiale Steifigkeit und/oder Dämpfungswirkung separate Aktoren vorgesehen sein. Auch kann ein gemeinsamer Aktor für beides vorgesehen sein. Grundsätzlich können auch mehrere Aktoren über den Innenund/oder Außenumfang des Lagerrings verteilt angeordnet sein, um eine besonders gleichmäßige Steuerung zu ermöglichen. Auch kann der Aktor selbst zumindest teilweise, insbesondere vollständig, umlaufend, beispielsweise bandförmig ausgebildet sein.

Bei einer weiteren Ausführungsform umfasst die Aufhängung zusätzlich zu dem Aktor zumindest ein passives Aufhängungselement zwischen Basiselement und Lagerring. Hierdurch kann auch im nicht aktivierten Zustand des Aktors eine vorteilhafte Steifigkeit und/oder Dämpfungswirkung bereitgestellt werden. Das passive Aufhängungselement kann beispielsweise radial und/oder axial zwischen Lagerring und Basiselement angeordnet sein.

Der Rotor kann beispielsweise außerdem durch ein Magnetlager gelagert sein. Eine derartige Anordnung wird auch als "Hybridlagerung" bezeichnet. Insbesondere können das Magnetlager einlassseitig und das Wälzlager auslassseitig angeordnet sein.

Die Aufgabe der Erfindung wird auch durch ein Verfahren gemäß Anspruch 12 gelöst, und insbesondere dadurch, dass eine Steifigkeit und/oder eine Dämpfungswirkung des Wälzlagers mittels eines Aktors verändert wird, der ein elektro- und/oder magnetoaktives Polymer umfasst.

Es versteht sich, dass das erfindungsgemäße Verfahren auch im Sinne der hierin beschriebenen Ausführungsformen der erfindungsgemäßen Vorrichtung vorteilhaft weitergebildet werden kann, und umgekehrt.

Nachfolgend wird die Erfindung beispielhaft anhand vorteilhafter Ausführungsformen unter Bezugnahme auf die beigefügten Figuren beschrieben. Es zeigen, jeweils schematisch:

Fig. 1    eine perspektivische Ansicht einer Turbomolekularpumpe,

Fig. 2    eine Ansicht der Unterseite der Turbomolekularpumpe von Fig. 1,

Fig. 3    einen Querschnitt der Turbomolekularpumpe längs der in Fig. 2 gezeigten Schnittlinie A-A,

Fig. 4 eine Querschnittsansicht der Turbomolekularpumpe längs der in Fig. 2 gezeigten Schnittlinie B-B,

Fig. 5 eine Querschnittsansicht der Turbomolekularpumpe längs der in Fig. 2 gezeigten Schnittlinie C-C,

Fig. 6 einen Aktor für eine erfindungsgemäße Vakuumpumpe,

Fig. 7 eine Ausführungsform eines Wälzlagers einer erfindungsgemäßen Vakuumpumpe,

Fig. 8 eine weitere Ausführungsform eines Wälzlagers einer erfindungsgemäßen Vakuumpumpe,

Fig. 9 noch eine weitere Ausführungsform eines Wälzlagers einer erfindungsgemäßen Vakuumpumpe,

Fig. 10 eine Auftragung von Schwingungsverläufen eines Rotors einer erfindungsgemäßen Vakuumpumpe,

Fig. 11 eine weitere Auftragung von Schwingungsverläufen desselben Rotors an einem anderen axialen Ort des Rotors.

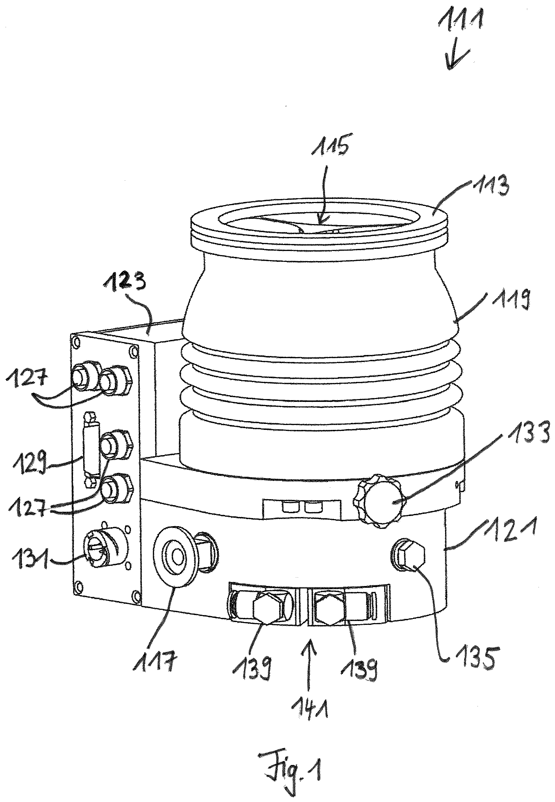

Die in Fig. 1 gezeigte Turbomolekularpumpe 111 umfasst einen von einem Einlassflansch 113 umgebenen Pumpeneinlass 115, an welchen in an sich bekannter Weise ein nicht dargestellter Rezipient angeschlossen werden kann. Das Gas aus dem Rezipienten kann über den Pumpeneinlass 115 aus dem Rezipienten gesaugt und durch die Pumpe hindurch zu einem Pumpenauslass 117 gefördert werden, an den eine Vorvakuumpumpe, wie etwa eine Drehschieberpumpe, angeschlossen sein kann.

Der Einlassflansch 113 bildet bei der Ausrichtung der Vakuumpumpe gemäß Fig. 1 das obere Ende des Gehäuses 119 der Vakuumpumpe 111. Das Gehäuse 119 umfasst ein Unterteil 121, an welchem seitlich ein Elektronikgehäuse 123 angeordnet ist. In dem Elektronikgehäuse 123 sind elektrische und/oder elektronische Komponenten der Vakuumpumpe 111 untergebracht, z. B. zum Betreiben eines in der Vakuumpumpe angeordneten Elektromotors 125. Am Elektronikgehäuse 123 sind mehrere Anschlüsse 127 für Zubehör vorgesehen. Außerdem sind eine Datenschnittstelle 129, z.B. gemäß dem RS485-Standard, und ein Stromversorgungsanschluss 131 am Elektronikgehäuse 123 angeordnet.

Am Gehäuse 119 der Turbomolekularpumpe 111 ist ein Fluteinlass 133, insbesondere in Form eines Flutventils, vorgesehen, über den die Vakuumpumpe 111 geflutet werden kann. Im Bereich des Unterteils 121 ist ferner noch ein Sperrgasanschluss 135, der auch als Spülgasanschluss bezeichnet wird, angeordnet, über welchen Spülgas zum Schutz des Elektromotors 125 vor dem von der Pumpe geförderten Gas in den Motorraum 137, in welchem der Elektromotor 125 in der Vakuumpumpe 111 untergebracht ist, gebracht werden kann. Im Unterteil 121 sind ferner noch zwei Kühlmittelanschlüsse 139 angeordnet, wobei einer der Kühlmittelanschlüsse als Einlass und der andere Kühlmittelanschluss als Auslass für Kühlmittel vorgesehen ist, das zu Kühlzwecken in die Vakuumpumpe geleitet werden kann.

Die untere Seite 141 der Vakuumpumpe kann als Standfläche dienen, sodass die Vakuumpumpe 111 auf der Unterseite 141 stehend betrieben werden kann. Die Vakuumpumpe 111 kann aber auch über den Einlassflansch 113 an einem Rezipienten befestigt werden und somit gewissermaßen hängend betrieben werden. Außerdem kann die Vakuumpumpe 111 so gestaltet sein, dass sie auch in Betrieb genommen werden kann, wenn sie auf andere Weise ausgerichtet ist als in Fig. 1 gezeigt ist. Es lassen sich auch Ausführungsformen der Vakuumpumpe realisieren, bei der die Unterseite 141 nicht nach unten, sondern zur Seite gewandt oder nach oben gerichtet angeordnet werden kann.

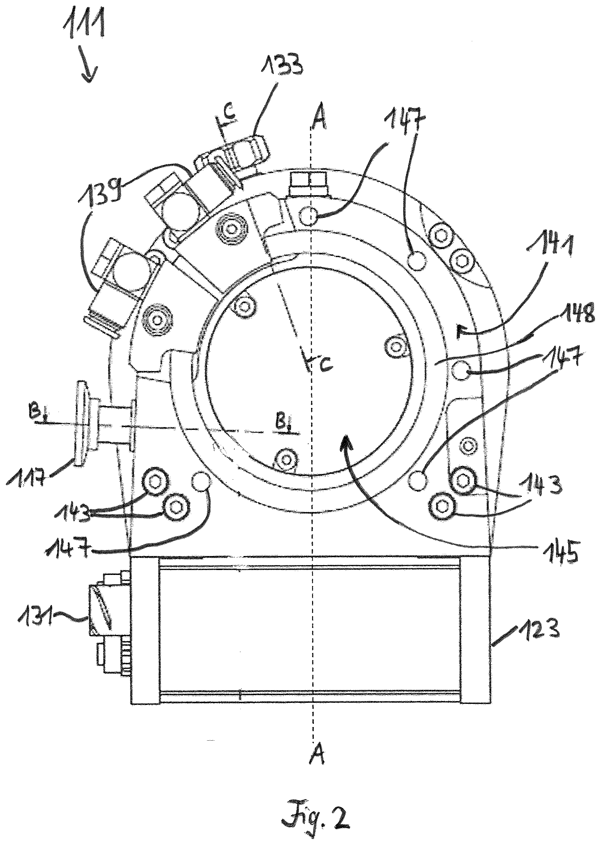

An der Unterseite 141, die in Fig. 2 dargestellt ist, sind noch diverse Schrauben 143 angeordnet, mittels denen hier nicht weiter spezifizierte Bauteile der Vakuumpumpe aneinander befestigt sind. Beispielsweise ist ein Lagerdeckel 145 an der Unterseite 141 befestigt.

An der Unterseite 141 sind außerdem Befestigungsbohrungen 147 angeordnet, über welche die Pumpe 111 beispielsweise an einer Auflagefläche befestigt werden kann.

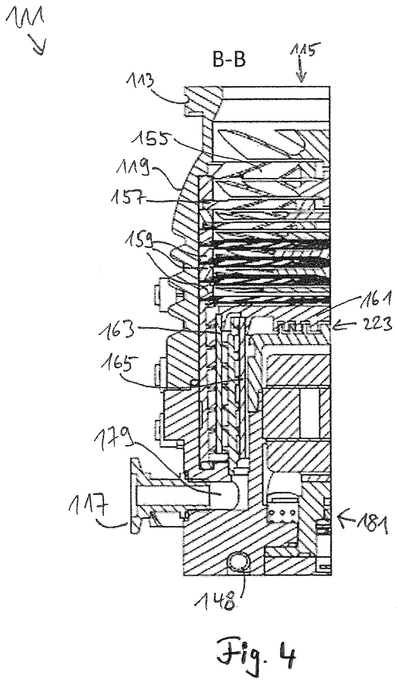

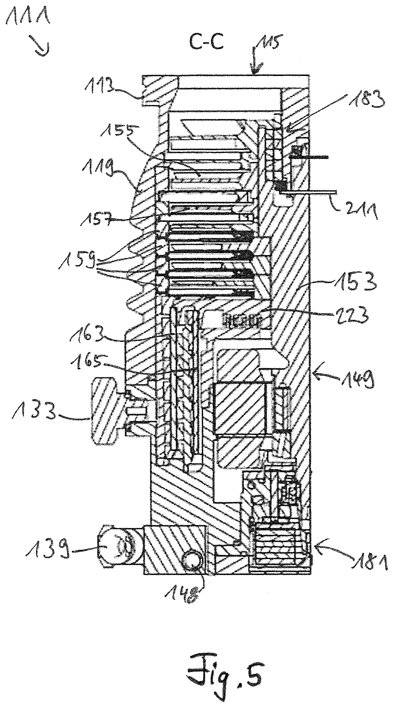

In den Figuren 2 bis 5 ist eine Kühlmittelleitung 148 dargestellt, in welcher das über die Kühlmittelanschlüsse 139 ein- und ausgeleitete Kühlmittel zirkulieren kann.

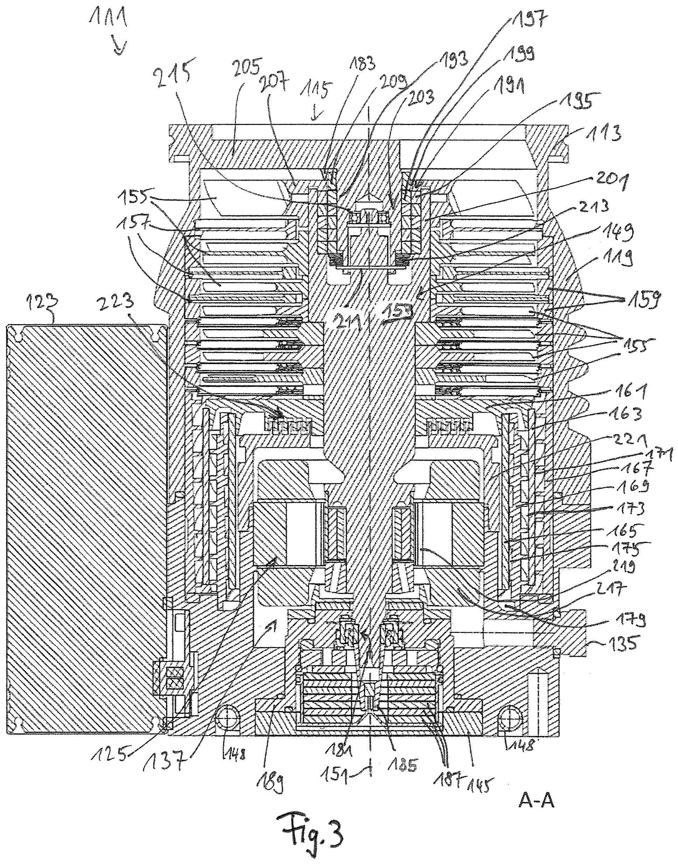

Wie die Schnittdarstellungen der Figuren 3 bis 5 zeigen, umfasst die Vakuumpumpe mehrere Prozessgaspumpstufen zur Förderung des an dem Pumpeneinlass 115 anstehenden Prozessgases zu dem Pumpenauslass 117.

In dem Gehäuse 119 ist ein Rotor 149 angeordnet, der eine um eine Rotationsachse 151 drehbare Rotorwelle 153 aufweist.

Die Turbomolekularpumpe 111 umfasst mehrere pumpwirksam miteinander in Serie geschaltete turbomolekulare Pumpstufen mit mehreren an der Rotorwelle 153 befestigten radialen Rotorscheiben 155 und zwischen den Rotorscheiben 155 angeordneten und in dem Gehäuse 119 festgelegten Statorscheiben 157. Dabei bilden eine Rotorscheibe 155 und eine benachbarte Statorscheibe 157 jeweils eine turbomolekulare Pumpstufe. Die Statorscheiben 157 sind durch Abstandsringe 159 in einem gewünschten axialen Abstand zueinander gehalten.

Die Vakuumpumpe umfasst außerdem in radialer Richtung ineinander angeordnete und pumpwirksam miteinander in Serie geschaltete Holweck-Pumpstufen.

Der Rotor der Holweck-Pumpstufen umfasst eine an der Rotorwelle 153 angeordnete Rotornabe 161 und zwei an der Rotornabe 161 befestigte und von dieser getragene zylindermantelförmige Holweck-Rotorhülsen 163, 165, die koaxial zur Rotationsachse 151 orientiert und in radialer Richtung ineinander geschachtelt sind. Ferner sind zwei zylindermantelförmige Holweck-Statorhülsen 167, 169 vorgesehen, die ebenfalls koaxial zu der Rotationsachse 151 orientiert und in radialer Richtung gesehen ineinander geschachtelt sind.

Die pumpaktiven Oberflächen der Holweck-Pumpstufen sind durch die Mantelflächen, also durch die radialen Innen- und/oder Außenflächen, der Holweck-Rotorhülsen 163, 165 und der Holweck-Statorhülsen 167, 169 gebildet. Die radiale Innenfläche der äußeren Holweck-Statorhülse 167 liegt der radialen Außenfläche der äußeren Holweck-Rotorhülse 163 unter Ausbildung eines radialen Holweck-Spalts 171 gegenüber und bildet mit dieser die der Turbomolekularpumpen nachfolgende erste Holweck-Pumpstufe. Die radiale Innenfläche der äußeren Holweck-Rotorhülse 163 steht der radialen Außenfläche der inneren Holweck-Statorhülse 169 unter Ausbildung eines radialen Holweck-Spalts 173 gegenüber und bildet mit dieser eine zweite Holweck-Pumpstufe. Die radiale Innenfläche der inneren Holweck-Statorhülse 169 liegt der radialen Außenfläche der inneren Holweck-Rotorhülse 165 unter Ausbildung eines radialen Holweck-Spalts 175 gegenüber und bildet mit dieser die dritte Holweck-Pumpstufe.

Am unteren Ende der Holweck-Rotorhülse 163 kann ein radial verlaufender Kanal vorgesehen sein, über den der radial außenliegende Holweck-Spalt 171 mit dem mittleren Holweck-Spalt 173 verbunden ist. Außerdem kann am oberen Ende der inneren Holweck-Statorhülse 169 ein radial verlaufender Kanal vorgesehen sein, über den der mittlere Holweck-Spalt 173 mit dem radial innenliegenden Holweck-Spalt 175 verbunden ist. Dadurch werden die ineinander geschachtelten Holweck-Pumpstufen in Serie miteinander geschaltet. Am unteren Ende der radial innenliegenden Holweck-Rotorhülse 165 kann ferner ein Verbindungskanal 179 zum Auslass 117 vorgesehen sein.

Die vorstehend genannten pumpaktiven Oberflächen der Holweck-Statorhülsen 163, 165 weisen jeweils mehrere spiralförmig um die Rotationsachse 151 herum in axialer Richtung verlaufende Holweck-Nuten auf, während die gegenüberliegenden Mantelflächen der Holweck-Rotorhülsen 163, 165 glatt ausgebildet sind und das Gas zum Betrieb der Vakuumpumpe 111 in den Holweck-Nuten vorantreiben.

Zur drehbaren Lagerung der Rotorwelle 153 sind ein Wälzlager 181 im Bereich des Pumpenauslasses 117 und ein Permanentmagnetlager 183 im Bereich des Pumpeneinlasses 115 vorgesehen.

Im Bereich des Wälzlagers 181 ist an der Rotorwelle 153 eine konische Spritzmutter 185 mit einem zu dem Wälzlager 181 hin zunehmenden Außendurchmesser vorgesehen. Die Spritzmutter 185 steht mit mindestens einem Abstreifer eines Betriebsmittelspeichers in gleitendem Kontakt. Der Betriebsmittelspeicher umfasst mehrere aufeinander gestapelte saugfähige Scheiben 187, die mit einem Betriebsmittel für das Wälzlager 181, z.B. mit einem Schmiermittel, getränkt sind.

Im Betrieb der Vakuumpumpe 111 wird das Betriebsmittel durch kapillare Wirkung von dem Betriebsmittelspeicher über den Abstreifer auf die rotierende Spritzmutter 185 übertragen und in Folge der Zentrifugalkraft entlang der Spritzmutter 185 in Richtung des größer werdenden Außendurchmessers der Spritzmutter 185 zu dem Wälzlager 181 hin gefördert, wo es z.B. eine schmierende Funktion erfüllt. Das Wälzlager 181 und der Betriebsmittelspeicher sind durch einen wannenförmigen Einsatz 189 und den Lagerdeckel 145 in der Vakuumpumpe eingefasst.

Das Permanentmagnetlager 183 umfasst eine rotorseitige Lagerhälfte 191 und eine statorseitige Lagerhälfte 193, welche jeweils einen Ringstapel aus mehreren in axialer Richtung aufeinander gestapelten permanentmagnetischen Ringen 195, 197 umfassen. Die Ringmagnete 195, 197 liegen einander unter Ausbildung eines radialen Lagerspalts 199 gegenüber, wobei die rotorseitigen Ringmagnete 195 radial außen und die statorseitigen Ringmagnete 197 radial innen angeordnet sind. Das in dem Lagerspalt 199 vorhandene magnetische Feld ruft magnetische Abstoßungskräfte zwischen den Ringmagneten 195, 197 hervor, welche eine radiale Lagerung der Rotorwelle 153 bewirken. Die rotorseitigen Ringmagnete 195 sind von einem Trägerabschnitt 201 der Rotorwelle 153 getragen, welcher die Ringmagnete 195 radial außenseitig umgibt. Die statorseitigen Ringmagnete 197 sind von einem statorseitigen Trägerabschnitt 203 getragen, welcher sich durch die Ringmagnete 197 hindurch erstreckt und an radialen Streben 205 des Gehäuses 119 aufgehängt ist. Parallel zu der Rotationsachse 151 sind die rotorseitigen Ringmagnete 195 durch ein mit dem Trägerabschnitt 203 gekoppeltes Deckelelement 207 festgelegt. Die statorseitigen Ringmagnete 197 sind parallel zu der Rotationsachse 151 in der einen Richtung durch einen mit dem Trägerabschnitt 203 verbundenen Befestigungsring 209 sowie einen mit dem Trägerabschnitt 203 verbundenen Befestigungsring 211 festgelegt. Zwischen dem Befestigungsring 211 und den Ringmagneten 197 kann außerdem eine Tellerfeder 213 vorgesehen sein.

Innerhalb des Magnetlagers ist ein Not- bzw. Fanglager 215 vorgesehen, welches im normalen Betrieb der Vakuumpumpe 111 ohne Berührung leer läuft und erst bei einer übermäßigen radialen Auslenkung des Rotors 149 relativ zu dem Stator in Eingriff gelangt, um einen radialen Anschlag für den Rotor 149 zu bilden, da eine Kollision der rotorseitigen Strukturen mit den statorseitigen Strukturen verhindert wird. Das Fanglager 215 ist als ungeschmiertes Wälzlager ausgebildet und bildet mit dem Rotor 149 und/oder dem Stator einen radialen Spalt, welcher bewirkt, dass das Fanglager 215 im normalen Pumpbetrieb außer Eingriff ist. Die radiale Auslenkung, bei der das Fanglager 215 in Eingriff gelangt, ist groß genug bemessen, sodass das Fanglager 215 im normalen Betrieb der Vakuumpumpe nicht in Eingriff gelangt, und gleichzeitig klein genug, sodass eine Kollision der rotorseitigen Strukturen mit den statorseitigen Strukturen unter allen Umständen verhindert wird.

Die Vakuumpumpe 111 umfasst den Elektromotor 125 zum drehenden Antreiben des Rotors 149. Der Anker des Elektromotors 125 ist durch den Rotor 149 gebildet, dessen Rotorwelle 153 sich durch den Motorstator 217 hindurch erstreckt. Auf den sich durch den Motorstator 217 hindurch erstreckenden Abschnitt der Rotorwelle 153 kann radial außenseitig oder eingebettet eine Permanentmagnetanordnung angeordnet sein. Zwischen dem Motorstator 217 und dem sich durch den Motorstator 217 hindurch erstreckenden Abschnitt des Rotors 149 ist ein Zwischenraum 219 angeordnet, welcher einen radialen Motorspalt umfasst, über den sich der Motorstator 217 und die Permanentmagnetanordnung zur Übertragung des Antriebsmoments magnetisch beeinflussen können.

Der Motorstator 217 ist in dem Gehäuse innerhalb des für den Elektromotor 125 vorgesehenen Motorraums 137 festgelegt. Über den Sperrgasanschluss 135 kann ein Sperrgas, das auch als Spülgas bezeichnet wird, und bei dem es sich beispielsweise um Luft oder um Stickstoff handeln kann, in den Motorraum 137 gelangen. Über das Sperrgas kann der Elektromotor 125 vor Prozessgas, z.B. vor korrosiv wirkenden Anteilen des Prozessgases, geschützt werden. Der Motorraum 137 kann auch über den Pumpenauslass 117 evakuiert werden, d.h. im Motorraum 137 herrscht zumindest annäherungsweise der von der am Pumpenauslass 117 angeschlossenen Vorvakuumpumpe bewirkte Vakuumdruck.

Zwischen der Rotornabe 161 und einer den Motorraum 137 begrenzenden Wandung 221 kann außerdem eine sog. und an sich bekannte Labyrinthdichtung 223 vorgesehen sein, insbesondere um eine bessere Abdichtung des Motorraums 217 gegenüber den radial außerhalb liegenden Holweck-Pumpstufen zu erreichen.

Die vorstehend beschriebene Vakuumpumpe 111 ist Teil des Standes der Technik. Aus Fig. 3 ist ersichtlich, dass es sich bei der Vakuumpumpe 111 um eine hybridgelagerte Turbomolekularpumpe handelt, also dass der Rotor 149 mittels einer Kombination von Wälzlager 181, hier auslassseitig, und Magnetlager 183, hier einlassseitig, gelagert ist. Die Vakuumpumpe 111 lässt sich vorteilhaft erfindungsgemäß weiterbilden und umgekehrt lassen sich auch die anderen hierin beschriebenen Vakuumpumpen und Betriebsverfahren durch einzelne oder eine Kombinationen von Merkmalen der Vakuumpumpe 111 vorteilhaft weiterbilden.

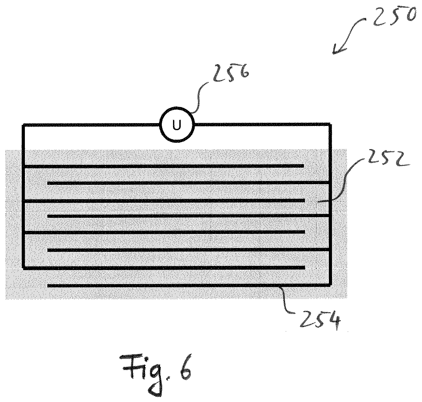

In Fig. 6 ist ein Aktor 250 gezeigt, der geeignet ist, eine veränderliche Steifigkeit und/oder Dämpfungswirkung für ein Wälzlager einer Vakuumpumpe bereitzustellen. Der Aktor 250 umfasst ein elektroaktives Polymer, welches einen beweglichen Körper 252 bildet. Der Körper 252 ist durchzogen von parallel ausgerichteten Elektroden 254, die an eine Spannungsquelle 256 angeschlossen sind, welche durch eine nicht gezeigte Steuerungsvorrichtung angesteuert wird. Sobald zwischen den Elektroden 254 durch die Spannungsquelle 256 eine Spannung eingestellt wird, verändert sich die Form des Körpers 252, insbesondere in senkrechter Richtung in Bezug auf die Elektroden 254, also in Fig. 6 vertikal. Dabei erfolgt jedoch gleichzeitig eine Verformung in den hierzu senkrechten Richtungen, also in Fig. 6 horizontal und senkrecht zur Bildebene, wobei diese Verformung jedoch üblicherweise geringer ist, als die Verformung senkrecht zu den Elektroden 254.

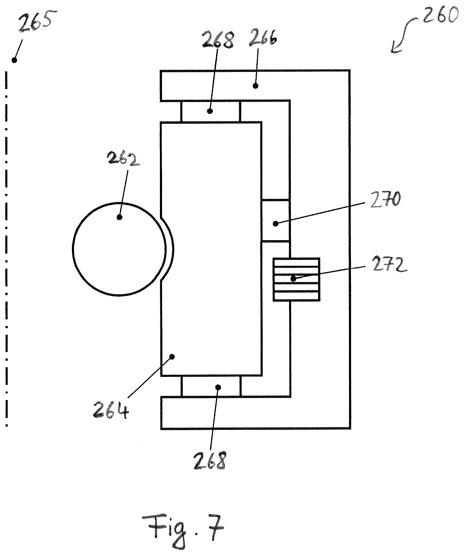

In Fig. 7 ist ein Teil eines Wälzlagers 260 einer erfindungsgemäßen Vakuumpumpe schematisch veranschaulicht. Das Wälzlager 260 ist als Kugellager ausgebildet und umfasst eine Mehrzahl an Kugeln 262, einen inneren Lagerring und einen Käfig (jeweils nicht dargestellt) sowie einen äußeren Lagerring 264, an dem die Kugeln 262 abrollen. Eine Rotationsachse eines nicht dargestellten Rotors ist durch Achse 265 angedeutet. Der Lagering 264 ist durch eine Aufhängung an einem Basiselement 266 gehalten. Die Aufhängung umfasst zwei axial angeordnete, passive Aufhängungselemente 268 und ein radial angeordnetes, passives Aufhängungselement 270.

Außerdem ist an dem Basiselement 266 ein Aktor 272 angeordnet, welcher dazu ausgebildet ist, durch eine elektrische Spannung seine Form zu verändern, und zwar derart, dass sich der Aktor 272 in Richtung hin zu dem Lagerring 264, in Fig. 7 in horizontaler Richtung, ausdehnt und diesen letztendlich beaufschlagt.

Anders als der Aktor 272 sind die passiven Aufhängungselemente 268 und 270 nicht ansteuerbar, daher die Bezeichnung "passiv". Diese Aufhängungselemente werden hinsichtlich ihrer Steifigkeit und Dämpfungswirkung entsprechend einer optimalen Auslegung gewählt. Grundsätzlich ist es jedoch auch denkbar, diese oder weitere Aufhängungselemente mit einer eigenen Aktorik, beispielsweise elektrisch verformbare Polymere, zu versehen, z.B. um eine noch präzisere Steuerung der gesamten Steifigkeit und/oder Dämpfungswirkung zu erreichen.

Der Aktor 272 berührt also im dargestellten Zustand den Lagerring 264 nicht und wird vorteilhaft derart angesteuert, dass er zur Erhöhung von Steifigkeit und Dämpfungswirkung des Wälzlagers 260 unter Spannung gesetzt wird, sich dadurch ausdehnt, den Lagerring 264 beaufschlagt und somit dem Lagerring 264 eine andere Steifigkeit und Dämpfungswirkung verleiht, als im Zustand ohne Berührung. Hierdurch werden vorteilhaft zwei Schaltzustände realisiert, die zwei verschiedenen Niveaus von Steifigkeit bzw. Dämpfungswirkung entsprechen.

Der Lagerring 264 stellt hier den Außenring des Wälzlagers 260 dar. Grundsätzlich kann aber auch beispielsweise ein Innenring entsprechend aufgehängt und aktorisch beeinflusst werden. Auch kann der Aktor 272 am Lagerring 264 befestigt sein und das Basiselement 266 wahlweise beaufschlagen. Der oder ein Aktor kann beispielsweise auch axial wirken und insbesondere eines der passiven Aufhängungselemente 268 ersetzen oder ergänzen. Grundsätzlich ist aber nicht nur eine strikte Trennung zwischen axialer und radialer Aufhängung, wie es gezeigt ist, denkbar, sondern auch beispielsweise ein Aufhängungselement und/oder Aktor an einer Ecke des Lagerrings 264 oder bei anderen Formen des Lagerrings 264 auch an zahlreichen anderen Stellen.

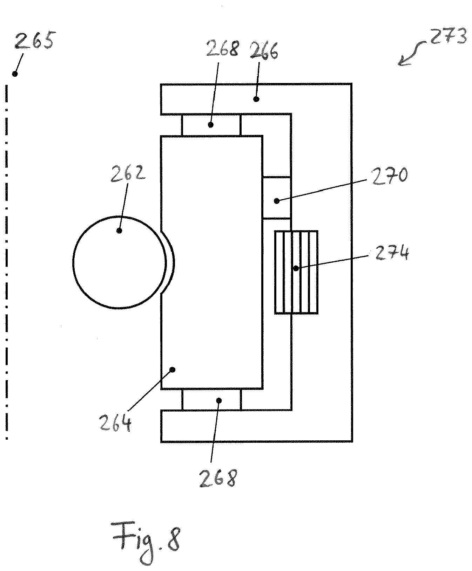

Elektroden des Aktors 272 sind durch parallele Linien angedeutet. Bei der Ausführungsform der Fig. 7 wird eine Ausdehnung des Aktors 272 in einer Richtung parallel zu den Elektroden genutzt. Das Wälzlager 273 der Fig. 8 unterscheidet sich im Wesentlichen dadurch, dass ein Aktor 274 vorgesehen ist, dessen Ausdehnung in einer Richtung senkrecht zu den Elektroden ausgenutzt wird, um den Lagerring 264 zu beaufschlagen.

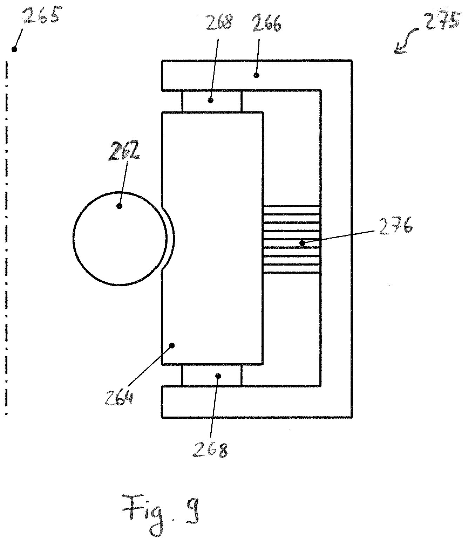

Bei der in Fig. 9 gezeigten Ausführungsform eines Wälzlagers 275 einer erfindungsgemäßen Vakuumpumpe ist dagegen ein Aktor 276 vorgesehen, welcher dauerhaft sowohl mit dem Basiselement 266 als auch mit dem Lagerring 264 verbunden ist. Hier verleiht der Aktor 276 der Aufhängung des Lagerrings 264 eine radiale Steifigkeit und Dämpfungswirkung auch im nicht angesteuerten Zustand durch seine passiven Materialeigenschaften. Aus diesem Grund wurde bei dieser Ausführungsform auch auf ein radiales, passives Aufhängungselement, wie es beispielsweise in den Fig. 7 und 8 durch Aufhängungselement 270 vorgesehen ist, verzichtet. Durch Anlegen einer Spannung an den Aktor 276 kann dieser verformt werden. Da er sich hier in radialer Richtung nicht ausdehnen kann, werden lediglich seine Steifigkeit und seine Dämpfungswirkung erhöht.

Der Aktor 276 kann beispielsweise stufenweise angesteuert werden oder auch kontinuierlich. Ähnlich wie bei der Ausführungsform der Fig. 7 wird hier die Formänderung des Aktors 276 in einer Richtung parallel zu den Elektroden und senkrecht zum elektrischen Feld genutzt, wobei jedoch auch beispielsweise eine Nutzung der Formänderung parallel zum elektrischen Feld denkbar ist.

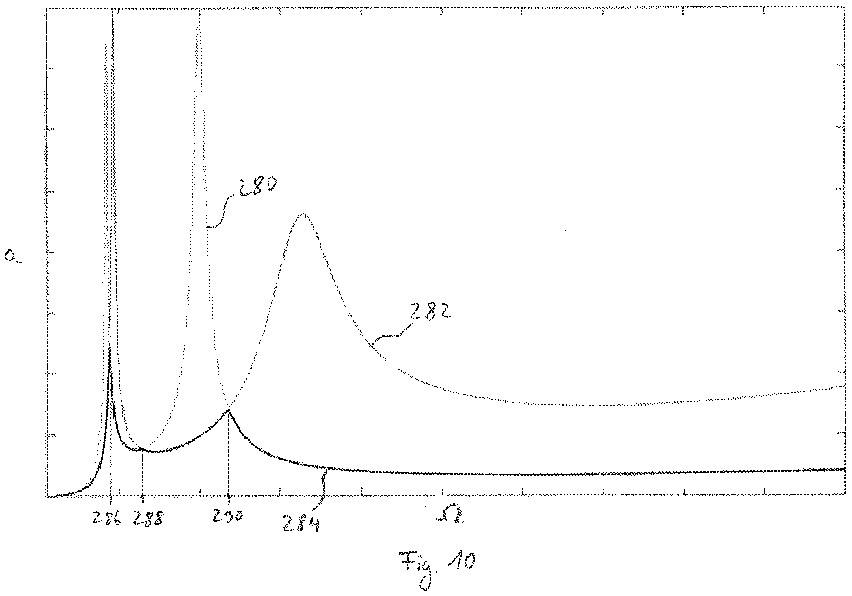

In Fig. 10 ist ein Diagramm gezeigt, welches Auftragungen eines Schwingungsverlaufes, ermittelt als Beschleunigung a einer Oberfläche der Vakuumpumpe, eines Rotors in Abhängigkeit seiner Drehfrequenz $\Omega$ zeigt. Der Rotor ist Teil einer beispielhaften erfindungsgemäßen Vakuumpumpe, die als hybridgelagerte Turbomolekularpumpe ausgebildet ist. Gezeigt sind Schwingungsverläufe an einem Unterteil der Turbomolekularpumpe, also in der Nähe des Wälzlagers. Das Wälzlager der Turbomolekularpumpe wird derart angesteuert, dass zwei Stufen von Steifigkeit und Dämpfungswirkung realisiert werden, nämlich eine "harte" und eine "weiche" Einstellung mit höherer bzw. niedrigerer Steifigkeit und Dämpfung.

Gezeigt ist erstens ein Schwindungsverlauf 280 des Rotors, der einer durchgehend weichen Einstellung des Wälzlagers entspricht. Bei dieser Einstellung weist der Rotor im gezeigten Drehfrequenzbereich zwei Schwingungsmaxima auf. Außerdem ist ein weiterer Schwingungsverlauf 282 gezeigt, der einer durchgehend harten Einstellung des Wälzlagers entspricht, wobei der Rotor im gezeigten Drehfrequenzbereich ebenfalls zwei Schwingungsmaxima aufweist, die jedoch bei anderen Drehfrequenzen liegen, als dies für die weiche Einstellung der Fall ist.

Als im Vergleich zu den Verläufen 280 und 282 dickere Linie ist ein Schwingungsverlauf 284 gezeigt, welcher dem tatsächlichen Schwingungsverlauf bei einer vorteilhaften Steuerung der Steifigkeit und der Dämpfungswirkung des Wälzlagers entspricht. Dabei wird stets die Einstellung, also hart oder weich gewählt, welche für die vorhandene Drehzahl bzw. Drehfrequenz eine niedrigere Schwingungsamplitude erwarten lässt.

Konkret wird beim Hochlauf, also ausgehend von einer Drehfrequenz $\Omega$ von Null, zunächst die harte Einstellung gewählt. Somit wird das erste Schwingungsmaximum der weichen Einstellung vermieden. Sobald sich die Drehfrequenz jedoch dem ersten Schwingungsmaximum der harten Einstellung nähert, wird bei einer ersten Umschaltfrequenz 286 auf die weiche Einstellung umgeschaltet, sodass auch das erste Schwingungsmaximum der harten Einstellung vermieden wird. Entsprechend wird für die jeweils zweiten Schwingungsmaxima verfahren, wobei jeweils an den Schnittpunkten der Schwingungsverläufe 280 und 282 bei einer zweiten Umschaltfrequenz 288 und bei einer dritten Umschaltfrequenz 290 umgeschaltet wird.

Es zeigt sich, dass der tatsächliche Schwingungsverlauf 284 in seiner Amplitude insgesamt deutlich geringer ist und insbesondere nicht die heftigen, durch Resonanz hervorgerufenen Maxima der jeweiligen Einstellungen hart bzw. weich aufweist. Hierdurch kann die Schallemission der Pumpe, welche maßgeblich durch die aufgetragene Oberflächenbeschleunigung beeinflusst wird, deutlich verringert werden. Auch wirkt sich dies auf die Lebensdauer der Pumpe positiv aus.

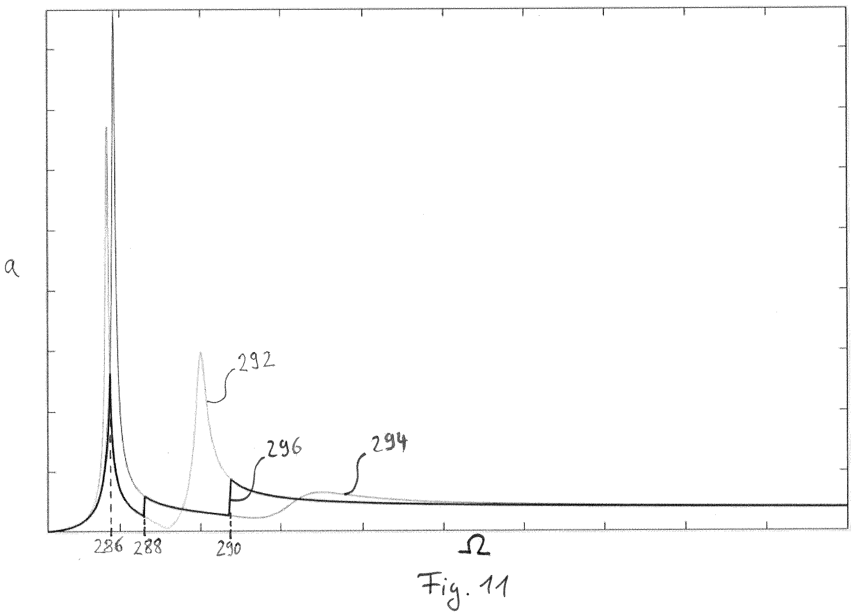

In Fig. 11 ist ein weiteres Diagramm mit aufgetragenen Schwingungsverläufen gezeigt, denen die Steuerung von Steifigkeit und Dämpfungswirkung wie bezüglich Fig. 10 beschrieben zugrunde liegt. Ermittelt wurden hier allerdings die Oberflächenbeschleunigungen a am Pumpengehäuse auf Höhe des Magnetlagers, also an einem anderen axialen Ort. Der Schwingungsverlauf 292 entspricht der weichen Einstellung und der Schwingungsverlauf 294 entspricht der harten Einstellung. Der tatsächliche Schwingungsverlauf 296 ist durch eine dickere Linie angedeutet.

Zwar ist hier nicht stets die niedrigstmögliche Schwingungsamplitude durch den tatsächlichen Schwingungsverlauf 296 genutzt. Dies liegt daran, dass das System in diesem anderen axialen Bereich ein etwas anderes Schwingungsverhalten aufweist. Jedoch können durch die gewählte Umschaltstrategie zwischen der weichen und harten Einstellung auch hier die Schwingungsmaxima vermieden und insgesamt eine verhältnismäßig geringe Schwingungsamplitude erreicht werden. Selbstverständlich kann eine Umschalt- oder Steuerstrategie für die Steifigkeit und/oder die Dämpfungswirkung des Wälzlagers auch anders ausgebildet sein, beispielsweise an dem Schwingungsverhalten auf Höhe des Magentlagers oder einer mittleren Höhe ausgerichtet sein, sodass dort jeweils die geringstmögliche Schwingung eingestellt wird.

Es ist vorteilhaft, wenn zwischen den Einstellungen hart und weich relativ schnell umgeschaltet wird. Beispielsweise ist eine Umschaltzeit $\tau < 5*2\pi/\Omega$ zwischen beiden Einstellungen besonders bevorzugt, wobei $\Omega$ die Drehfrequenz des Rotors am Umschaltpunkt darstellt. Bei Turbomolekularpumpen sind beispielsweise Umschaltzeiten von höchstens 100 ms vorteilhaft. Eine lediglich graduelle Änderung könnte dagegen zu einem eingeschwungenen rotordynamischen Zustand während des Schaltens führen und somit zu einer kurzzeitigen Resonanzüberhöhung.

Es zeigt sich, dass erfindungsgemäß mit einfachen Mitteln die Schwingungen in der Vakuumpumpe deutlich reduziert werden können und insbesondere heftige Schwingungsmaxima infolge von Resonanz vermieden werden können. So kann über einen großen Drehzahlbereich hinweg eine gute Laufruhe mit geringen akustischen Emissionen erreicht werden. Auch wird hierdurch nicht lediglich die subjektive akustische Wahrnehmung der Pumpe angenehmer, sondern angeschlossene Systeme werden auch deutlich geringeren Schwingungen ausgesetzt, was deren Arbeitspräzision erhöhen kann. Nicht zuletzt wirkt sich die Erfindung auch positiv auf die Lebensdauer der Vakuumpumpe aus.

**Bezugszeichenliste**

| | |
|---|---|
| 111 | Turbomolekularpumpe |
| 113 | Einlassflansch |
| 115 | Pumpeneinlass |
| 117 | Pumpenauslass |
| 119 | Gehäuse |
| 121 | Unterteil |
| 123 | Elektronikgehäuse |
| 125 | Elektromotor |
| 127 | Zubehöranschluss |
| 129 | Datenschnittstelle |
| 131 | Stromversorgungsanschluss |
| 133 | Fluteinlass |
| 135 | Sperrgasanschluss |
| 137 | Motorraum |
| 139 | Kühlmittelanschluss |
| 141 | Unterseite |
| 143 | Schraube |
| 145 | Lagerdeckel |
| 147 | Befestigungsbohrung |
| 148 | Kühlmittelleitung |
| 149 | Rotor |
| 151 | Rotationsachse |
| 153 | Rotorwelle |
| 155 | Rotorscheibe |
| 157 | Statorscheibe |
| 159 | Abstandsring |
| 161 | Rotornabe |
| 163 | Holweck-Rotorhülse |
| 165 | Holweck-Rotorhülse |
| 167 | Holweck-Statorhülse |
| 169 | Holweck-Statorhülse |
| 171 | Holweck-Spalt |
| 173 | Holweck-Spalt |
| 175 | Holweck-Spalt |
| 179 | Verbindungskanal |
| 181 | Wälzlager |
| 183 | Permanentmagnetlager |
| 185 | Spritzmutter |
| 187 | Scheibe |
| 189 | Einsatz |
| 191 | rotorseitige Lagerhälfte |
| 193 | statorseitige Lagerhälfte |
| 195 | Ringmagnet |
| 197 | Ringmagnet |
| 199 | Lagerspalt |
| 201 | Trägerabschnitt |
| 203 | Trägerabschnitt |
| 205 | radiale Strebe |
| 207 | Deckelelement |
| 209 | Stützring |
| 211 | Befestigungsring |
| 213 | Tellerfeder |
| 215 | Not- bzw. Fanglager |
| 217 | Motorstator |
| 219 | Zwischenraum |
| 221 | Wandung |
| 223 | Labyrinthdichtung |
| 250 | Aktor |
| 252 | Körper |
| 254 | Elektrode |
| 256 | Spannungsquelle |
| 260 | Wälzlager |
| 262 | Kugel |
| 264 | Lagerring |
| 265 | Achse |
| 266 | Basiselement |
| 268 | passives Aufhängungselement |
| 270 | passives Aufhängungselement |
| 272 | Aktor |
| 273 | Wälzlager |
| 274 | Aktor |
| 275 | Wälzlager |
| 276 | Aktor |
| 280 | Schwingungsverlauf |
| 282 | Schwingungsverlauf |
| 284 | Schwingungsverlauf |
| 286 | erste Umschaltfrequenz |

288　　zweite Umschaltfrequenz
290　　dritte Umschaltfrequenz
290　　Schwingungsverlauf
292　　Schwingungsverlauf
294　　Schwingungsverlauf

Ω　　Drehfrequenz
a　　Beschleunigung

**Patentansprüche**

1. Vakuumpumpe, insbesondere Turbomolekularpumpe, mit einem Gehäuse, und

   einem in dem Gehäuse drehbar gelagerten Rotor, der zu einer Drehung antreibbar ist, die eine Förderung eines Prozessgases von einem Einlass zu einem Auslass der Vakuumpumpe bewirkt,
   wobei der Rotor in dem Gehäuse zumindest einseitig durch ein Wälzlager (260, 273, 275) drehbar gelagert ist, und
   wobei ein Aktor (250, 272, 274, 276) vorgesehen ist, mittels dessen eine Steifigkeit und/oder eine Dämpfungswirkung des Wälzlagers (260, 273, 275) veränderbar ist,
   **dadurch gekennzeichnet, dass**
   der Aktor (250, 272, 274, 276) ein elektro- und/oder magnetoaktives Polymer umfasst und dass der Aktor in einer Betätigungsrichtung eine Länge von mindestens 1 mm aufweist.

2. Vakuumpumpe nach Anspruch 1,
   **dadurch gekennzeichnet, dass**
   die Steifigkeit und/oder die Dämpfungswirkung in radialer und/oder in axialer Richtung veränderbar ist.

3. Vakuumpumpe nach zumindest einem der vorstehenden Ansprüche,
   **dadurch gekennzeichnet, dass**
   eine Steuerungsvorrichtung vorgesehen ist, die dazu ausgebildet ist, die Steifigkeit und/oder die Dämpfungswirkung des Wälzlagers (260, 273, 275) in Abhängigkeit von einer Drehzahl und/oder einem Schwingungsverhalten des Rotors zu verändern, und/oder die dazu ausgebildet ist, die Steifigkeit und/oder die Dämpfungswirkung zwischen zumindest zwei Einstellungen oder Stufen umzuschalten.

4. Vakuumpumpe nach zumindest einem der vorstehenden Ansprüche, **dadurch gekennzeichnet, dass** eine Steuerungsvorrichtung vorgesehen ist, die dazu ausgebildet ist, die Steifigkeit und/oder die Dämpfungswirkung innerhalb einer Zeitspanne zu verändern und/oder innerhalb einer Zeitspanne zwischen zwei Einstellungen oder Stufen, insbesondere zwischen einer harten Einstellung und einer weichen Einstellung, umzuschalten, wobei vorzugsweise die Zeitspanne weniger als 1 Sekunde, bevorzugt weniger als 500 ms, insbesondere bevorzugt weniger als 100 ms beträgt, und/oder wobei vorzugsweise für die Beziehung zwischen der Zeitspanne $\tau$ und der Drehfrequenz Ω des Rotors gilt: $\tau < 5*2\pi/\Omega$.

5. Vakuumpumpe nach zumindest einem der vorstehenden Ansprüche,
   **dadurch gekennzeichnet, dass**
   eine Steuerungsvorrichtung vorgesehen ist, die dazu ausgebildet ist, den Aktor (250, 272, 274, 276) auch als Sensor für ein Schwingungsverhalten des Rotors zu verwenden.

6. Vakuumpumpe nach zumindest einem der vorstehenden Ansprüche,
   **dadurch gekennzeichnet, dass**
   das Wälzlager (260, 273, 275) zumindest einen Lagerring (264) und eine Mehrzahl an Wälzkörpern (262) umfasst, die an dem Lagerring (264) abrollen, wobei ein Basiselement (266) und eine Aufhängung für den Lagerring (264) zwischen dem Lagerring (264) und dem Basiselement (266) vorgesehen sind, wobei die Aufhängung den Aktor (272, 274, 276) umfasst und dem Wälzlager (260, 273, 275) die veränderbare Steifigkeit und/oder Dämpfungswirkung zumindest teilweise verleiht.

7. Vakuumpumpe nach Anspruch 6,
   **dadurch gekennzeichnet, dass**
   der Aktor (272, 274, 276) dazu ausgebildet ist, den Lagerring (264) zur Realisierung unterschiedlicher Steifigkeiten und/oder Dämpfungswirkungen unterschiedlich stark in radialer und/oder axialer Richtung zu beaufschlagen.

8. Vakuumpumpe nach Anspruch 6 oder 7,
   **dadurch gekennzeichnet, dass**
   der Aktor (272, 274) derart ausgebildet ist, dass er in einem ersten Schaltzustand zumindest eines von Lagerring (264) und Basiselement (266) nicht berührt und in einem zweiten Schaltzustand den Lagerring (264) abgestützt am Basiselement (266) beaufschlagt.

9. Vakuumpumpe nach Anspruch 6 oder 7,
   **dadurch gekennzeichnet, dass**
   der Aktor (276) derart ausgebildet ist, dass er dauerhaft mit dem Lagerring (264) und dem Basiselement (266) verbunden ist.

10. Vakuumpumpe nach zumindest einem der Ansprüche 6 bis 9,
    **dadurch gekennzeichnet, dass**
    die Aufhängung zusätzlich zu dem Aktor (272, 274, 276) zumindest ein passives Aufhängungselement (268, 270) zwischen Basiselement (266) und Lagerring (264) umfasst.

**11.** Vakuumpumpe nach Anspruch 10,
**dadurch gekennzeichnet, dass**
das passive Aufhängungselement (268, 270) radial und/oder axial zwischen Lagerring (264) und Basiselement (266) angeordnet ist.

**12.** Verfahren zum Betreiben einer Vakuumpumpe, insbesondere einer Vakuumpumpe nach einen der vorhergehenden Ansprüche,

wobei die Vakuumpumpe ein Gehäuse, und einen in dem Gehäuse drehbar gelagerten Rotor umfasst, der zu einer Drehung angetrieben wird, die eine Förderung eines Prozessgases von einem Einlass zu einem Auslass der Vakuumpumpe bewirkt,
wobei der Rotor in dem Gehäuse zumindest einseitig durch ein Wälzlager (260, 273, 275) drehbar gelagert wird, und
wobei eine Steifigkeit und/oder eine Dämpfungswirkung des Wälzlagers (260, 273, 275) mittels eines Aktors (250, 272, 274, 276) verändert wird,
**dadurch gekennzeichnet, dass**
der Aktor (250, 272, 274, 276) ein elektro- und/oder magnetoaktives Polymer umfasst und dass der Aktor in einer Betätigungsrichtung eine Länge von mindestens 1 mm aufweist.

**Claims**

**1.** A vacuum pump, in particular a turbomolecular pump, comprising

a housing; and
a rotor which is rotatably supported in the housing and which can be driven to make a rotation which brings about a conveying of a process gas from an inlet to an outlet of the vacuum pump, wherein the rotor is rotatably supported in the housing at least at one side by a rolling element bearing (260, 273, 275), and
wherein an actuator (250, 272, 274, 276) is provided by means of which a stiffness and/or a damping effect of the rolling element bearing (260, 273, 275) can be varied,
**characterized in that**
the actuator (250, 272, 274, 276) comprises an electroactive and/or magnetoactive polymer; and
**in that** the actuator has a length of at least 1 mm in an actuation direction.

**2.** A vacuum pump in accordance with claim 1,
**characterized in that**

the stiffness and/or the damping effect can be varied in the radial and/or axial direction.

**3.** A vacuum pump in accordance with at least one of the preceding claims,
**characterized in that**
a control apparatus is provided which is configured to vary the stiffness and/or the damping effect of the rolling element bearing (260, 273, 275) in dependence on a rotational speed and/or a vibration behavior of the rotor and/or which is configured to switch the stiffness and/or the damping effect between at least two settings or stages.

**4.** A vacuum pump in accordance with at least one of the preceding claims,
**characterized in that**
a control apparatus is provided which is configured to vary the stiffness and/or the damping effect within a time period and/or to switch between two settings or stages, in particular between a hard setting and a soft setting, within a time period, with preferably the time period amounting to less than 1 second, preferably less than 500 ms, in particular preferably less than 100 ms, and/or with preferably the following applying to the relationship between the time period $\tau$ and the rotational frequency $\Omega$ of the rotor:

$$\tau < 5 * 2\pi / \Omega.$$

**5.** A vacuum pump in accordance with at least one of the preceding claims,
**characterized in that**
a control apparatus is provided which is configured to also use the actuator (250, 272, 274, 276) as a sensor for a vibration behavior of the rotor.

**6.** A vacuum pump in accordance with at least one of the preceding claims,
**characterized in that**
the rolling element bearing (260, 273, 275) comprises at least one bearing ring (264) and a plurality of rolling elements (262) which roll off at the bearing ring (264), with a base element (266) and a suspension for the bearing ring (264) being provided between the bearing ring (264) and the base element (266), with the suspension comprising the actuator (272, 274, 276) and at least partly granting the variable stiffness and/or damping effect to the rolling element bearing (260, 273, 275).

**7.** A vacuum pump in accordance with claim 6,
**characterized in that**
the actuator (272, 274, 276) is configured to act on the bearing ring (264) to different degrees in the radial and/or axial direction in order to implement different stiffnesses and/or damping effects.

**8.** A vacuum pump in accordance with claim 6 or claim 7,
**characterized in that**
the actuator (272, 274) is configured such that it does not contact at least one of the bearing ring (264) and the base element (266) in a first switching state and such that it acts on the bearing ring (264) supported at the base element (266) in a second switching state.

**9.** A vacuum pump in accordance with claim 6 or claim 7,
**characterized in that**
the actuator (276) is configured such that it is permanently connected to the bearing ring (264) and the base element (266).

**10.** A vacuum pump in accordance with at least one of the claims 6 to 9,
**characterized in that**,
in addition to the actuator (272, 274, 276), the suspension comprises at least one passive suspension element (268, 270) between the base element (266) and the bearing ring (264).

**11.** A vacuum pump in accordance with claim 10,
**characterized in that**
the passive suspension element (268, 270) is radially and/or axially arranged between the bearing ring (264) and the base element (266).

**12.** A method of operating a vacuum pump, in particular a vacuum pump in accordance with any one of the preceding claims,

wherein the vacuum pump comprises a housing and a rotor which is rotatably supported in the housing and which is driven to make a rotation which brings about a conveying of a process gas from an inlet to an outlet of the vacuum pump, wherein the rotor is rotatably supported in the housing at least at one side by a rolling element bearing (260, 273, 275), and wherein a stiffness and/or a damping effect of the rolling element bearing (260, 273, 275) is/are varied by means of an actuator (250, 272, 274, 276),
**characterized in that**
the actuator (250, 272, 274, 276) comprises an electroactive and/or magnetoactive polymer; and **in that** the actuator has a length of at least 1 mm in an actuation direction.

**Revendications**

**1.** Pompe à vide, en particulier pompe turbomoléculaire, comportant un boîtier, et

un rotor qui est monté de manière mobile en rotation dans le boîtier et qui peut être entraîné en une rotation qui provoque le transport d'un gaz de traitement depuis une entrée jusqu'à une sortie de la pompe à vide, le rotor étant monté dans le boîtier de manière mobile en rotation au moins sur un côté par un palier à roulement (260, 273, 275), et
un actionneur (250, 272, 274, 276) étant prévu, permettant de varier une rigidité et/ou un effet d'amortissement du palier à roulement (260, 273, 275), **caractérisée en ce que**
l'actionneur (250, 272, 274, 276) comprend un polymère électro- et/ou magnéto-actif, et **en ce que**
l'actionneur présente une longueur d'au moins 1 mm dans une direction d'actionnement.

**2.** Pompe à vide selon la revendication 1,
**caractérisée en ce que**
la rigidité et/ou l'effet d'amortissement est variable dans la direction radiale et/ou axiale.

**3.** Pompe à vide selon l'une au moins des revendications précédentes,
**caractérisée en ce que**
il est prévu un dispositif de commande qui est réalisé pour varier la rigidité et/ou l'effet d'amortissement du palier à roulement (260, 273, 275) en fonction d'une vitesse de rotation et/ou d'un comportement vibratoire du rotor, et/ou qui est réalisé pour commuter la rigidité et/ou l'effet d'amortissement entre au moins deux réglages ou étages.

**4.** Pompe à vide selon l'une au moins des revendications précédentes, **caractérisée en ce que**
il est prévu un dispositif de commande qui est réalisé pour varier la rigidité et/ou l'effet d'amortissement durant une période de temps et/ou pour commuter entre deux réglages ou étages, en particulier entre un réglage dur et un réglage doux, durant une période de temps, la période de temps étant de préférence inférieure à 1 seconde, de préférence inférieure à 500 ms, en particulier de préférence inférieure à 100 ms, et/ou la relation entre la période de temps $\tau$ et la fréquence de rotation $\Omega$ du rotor étant de préférence :

$$\tau < 5 * 2\,\pi/\Omega.$$

**5.** Pompe à vide selon l'une au moins des revendications précédentes,
**caractérisée en ce que**
Il est prévu un dispositif de commande qui est réalisé pour utiliser l'actionneur (250, 272, 274, 276) également à titre de capteur pour un comportement vibratoire du rotor.

**6.** Pompe à vide selon l'une au moins des revendications précédentes,
**caractérisée en ce que**
le palier à roulement (260, 273, 275) comprend au moins une bague de roulement (264) et une pluralité de corps de roulement (262) roulant sur la bague de roulement (264), un élément de base (266) et une suspension pour la bague de roulement (264) étant prévus entre la bague de roulement (264) et l'élément de base (266), la suspension comprenant l'actionneur (272, 274, 276) et conférant au moins partiellement la rigidité et/ou l'effet d'amortissement variable au palier à roulement (260, 273, 275).

**7.** Pompe à vide selon la revendication 6,
**caractérisée en ce que**
l'actionneur (272, 274, 276) est réalisé pour solliciter la bague de roulement (264) avec des intensités différentes dans la direction radiale et/ou axiale, afin de réaliser des rigidités et/ou des effets d'amortissement différents.

**8.** Pompe à vide selon la revendication 6 ou 7,
**caractérisée en ce que**
l'actionneur (272, 274) est réalisé de telle sorte que, dans un premier état de commutation, il ne touche pas au moins un élément parmi la bague de roulement (264) et l'élément de base (266) et, dans un deuxième état de commutation, il sollicite la bague de roulement (264) appuyée sur l'élément de base (266).

**9.** Pompe à vide selon la revendication 6 ou 7,
**caractérisée en ce que**
l'actionneur (276) est réalisé de manière à être relié en permanence à la bague de roulement (264) et à l'élément de base (266).

**10.** Pompe à vide selon l'une au moins des revendications 6 à 9,
**caractérisée en ce que**
la suspension comprend, outre l'actionneur (272, 274, 276), au moins un élément de suspension passif (268, 270) entre l'élément de base (266) et la bague de roulement (264).

**11.** Pompe à vide selon la revendication 10,
**caractérisée en ce que**
l'élément de suspension passif (268, 270) est disposé radialement et/ou axialement entre la bague de roulement (264) et l'élément de base (266).

**12.** Procédé pour faire fonctionner une pompe à vide, en particulier une pompe à vide selon l'une des revendications précédentes,

dans lequel
la pompe à vide comprend un boîtier et un rotor monté de manière mobile en rotation dans le boîtier et entraîné en une rotation qui provoque le transport d'un gaz de traitement depuis une entrée jusqu'à une sortie de la pompe à vide,
le rotor est monté dans le boîtier de manière mobile en rotation au moins sur un côté par un palier à roulement (260, 273, 275), et une rigidité et/ou un effet d'amortissement du palier à roulement (260, 273, 275) est varié(e) au moyen d'un actionneur (250, 272, 274, 276),
**caractérisé en ce que**
l'actionneur (250, 272, 274, 276) comprend un polymère électro- et/ou magnéto-actif, et **en ce que**
l'actionneur présente une longueur d'au moins 1 mm dans une direction d'actionnement.

Fig. 1

Fig. 2

Fig.3

EP 3 536 965 B1

B-B

Fig. 4

17

C-C

Fig. 5

Fig. 6

Fig. 7

Fig. 8

EP 3 536 965 B1

Fig. 9

Fig. 10

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007052479 A1
- DE 2519651 A1
- EP 3043074 A1